# EUROPÄISCHE PATENTSCHRIFT

(11) **EP 3 918 243 B1**
(45) Veröffentlichungstag und Bekanntmachung des Hinweises auf die Patenterteilung: **13.04.2022**
(21) Anmeldenummer: 20705946.0
(22) Anmeldetag: 17.02.2020
(51) Int. Cl.: F16L 37/088, F16L 37/12, F16L 37/138

(54) **STECKVERBINDUNG FÜR FLUID-LEITUNGEN**
PLUG CONNECTION FOR FLUID LINES
RACCORD À ENFICHAGE POUR CONDUITES DE FLUIDE

(30) Priorität: 27.03.2019 DE 102019107909
(43) Veröffentlichungstag der Anmeldung: 08.12.2021
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE)
(74) Vertreter: Dr. Solf & Zapf Patent- und Rechtsanwalts PartG mbB
(86) Internationale Anmeldenummer: PCT/EP2020/054080
(87) Internationale Veröffentlichungsnummer: WO 2020/193011

(56) Entgegenhaltungen:
- EP-B1- 2 281 136
- WO-A1-2013/034343

## Beschreibung

Die vorliegende Erfindung betrifft eine Steckverbindung für Fluidleitungen gemäß dem Oberbegriff des Anspruchs 1.

Mit derartigen Steckverbindungen können Leitungen (beispielsweise Rohr- oder Schlauchleitungen) für hydraulische und/oder pneumatische Strömungs- bzw. Druckmedien lösbar (trennbar) miteinander verbunden und/oder an beliebige Aggregate angeschlossen werden.

Eine Steckverbindung der gattungsgemäßen Art, bei welcher der Keilschieber als Antriebselement für eine Zwangsbewegung von Halteelement und Steckerschaft dient, ist in der EP 2 281 136 B1 beschrieben. Die Schlitzöffnung des bekannten Keilschiebers weist radienförmige Erweiterungen auf, welche an die Kontur des Steckers angepasst sein müssen, dadurch sind die Kräfte, um das System von der Lösestellung in Haltestellung und zurück zu bewegen, geometrisch nur geringfügig beeinflussbar. Weiterhin entstehen beim Verriegeln des Systems an den Keilflächen Reib- und Klemmkräfte, die das Einrasten der radienförmigen Erweiterung in einer Nut im Stecker erschweren bzw. verhindern.

Eine weitere Steckverbindung ist aus der DE 10 2006 016 647 A1 bekannt. Hierbei wird ebenfalls, um die Relativbewegung, d. h. ein Wieder-Einstecken des Steckerschaftes relativ zu dem Halteelement zu verhindern, wodurch das Halteelement sich wieder radial nach innen in seine Lösestellung bewegen würde und den Stecker zum Lösen freigeben würde, ein Verriegelungselement formschlüssig zwischen das Halteelement und einem Widerlagerelement (Haltestufe) des Steckerteils eingebracht.

Der vorliegenden Erfindung liegt die Aufgabe zu Grunde, ausgehend von der gattungsgemäßen Steckverbindung diese derart zu verbessern, dass unter Beibehaltung der Funktionseigenschaften die Handhabung verbessert und vereinfacht wird.

Erfindungsgemäß wird dies durch die Merkmale des Anspruchs 1 erreicht.

Erfindungsgemäß hat das Schieberteil Anlagearme und das Festteil Führungsmittel zur Anlage und Führung der Anlagearme des Schieberteils. Dadurch wird die Überführung des Schieberteils von der Freigabestellung in die Riegelstellung vereinfacht, und insbesondere die Führung der Anlagearme wird gesichert und der Überführweg verbessert. Erfindungsgemäß haben das Festteil und das Schieberteil ineinandergreifende Rastmittel zum unverlierbaren Halten in der Freigabe- und der Riegelstellung. Infolgedessen kann das Schieberteil im Festteil einrasten und insbesondere dem Anwender beim Einrasten ein akustisches Feedback geben. Erfindungsgemäß wird das Schieberteil in seiner Haltestellung und in seiner Lösestellung jeweils unabhängig von dem Stecker an dem Festteil gehalten, so dass die Rastfunktion von dem Steckerteil entkoppelt wird.

Im Sinne der Erfindung kann der Keilschieber vorteilhafterweise erste und zweite Rastmittel aufweisen, insbesondere kann das Festteil erste Rastmittel und/oder zweite Rastmittel und die Anlagearme des Schieberteils ebenfalls erste Rastmittel und/oder zweite Rastmittel zum Halten des Schieberteils in der Freigabestellung und der Riegelstellung aufweisen.

In einer ersten bevorzugten Ausführung der erfindungsgemäßen Steckverbindung sind die Anlagearme des Schieberteils federelastisch ausgebildet und weisen beidseitig der Keilflächen Seitenwände auf. Die Seitenwände bilden gemeinsam mit den Keilflächen eine Aufnahmevertiefung zur bereichsweisen Aufnahme des Festteils, wobei das Schieberteil das Festteil bereichsweise umgreift. Dadurch lässt sich der Keilschieber kompakt gestalten. Weiterhin wird die Führung der Anlagearme begünstigt und das Eindringen von Fremdkörpern, insbesondere zwischen die Keilflächen, verhindert. Verbessert wird dieser Effekt, wenn die Anlagearme des Schieberteils insbesondere die Führungsmittel des Festteils umgreifen.

Für einen guten Halt in der Freigabestellung können die Seitenwände der Anlagearme, jeweils vorzugsweise an einer Schlitzöffnung, ein radial zur Steckachse nach innen gerichtetes erstes Rastmittel aufweisen. Dabei weist das Festteil zu den ersten Rastmitteln der Anlagearme kompatible erste Rastmittel auf, wodurch das Schieberteil in der Freigabestellung an dem Festteil gehalten wird. Insbesondere werden in dieser Ausführung die ersten und die zweiten Rastmittel für die Freigabestellung und die Riegelstellung separiert. Vorteilhaft sind die ersten Rastmittel am Festteil als Vorsprünge ausgebildet, die beidseitig am Festteil im Außenbereich der Keilflächen und parallel zur Steckachse verlaufend angeordnet sind. Dies betreffend ist es bevorzugt, wenn die ersten Rastmittel des Schieberteils jeweils das Ende der Anlagearme des Schieberteils bilden, und vorzugsweise in der Riegelstellung im Außenbereich bündig mit dem Festteil enden. Vorteilhafterweise lässt sich dadurch in Kombination mit weiteren aufgeführten vorteilhaften Ausführungen eine vollständig ausgefüllte Schlitzöffnung zwischen den Anlagearmen bewirken. Speziell wenn die Anlagearme bündig mit dem Festteil enden, erreicht man eine kompakte und sichere Bauform.

Gemäß einer zweiten vorteilhaften Ausführungsform der Steckverbindung besitzt das Festteil für eine vereinfachte und sichere Handhabung insbesondere beim Stellungswechsel des Schieberteils federelastische Führungsarme. Die federelastischen Führungsarme bilden zusammen mit den Führungsmitteln für die Anlagearme des Schieberteils einen Führungskanal. Im praktischen Einsatz wird der richtige Einsatz des Schieberteils in das Festteil und die Überführung in und aus der Riegelstellung durch den Führungskanal sichergestellt. Insbesondere können zum weiteren Verbessern der Handhabung die Anlagearme des Schieberteils in Richtung der Steckachse vollständig keilförmig ausgebildet sein. Vorteilhafterweise können auch die Anlagearme zu ihrem jeweiligen Ende hin radial zur Steckachse keilförmig ausgebildet sein. Das Festteil weist derart bemessene Aussparungen auf, dass beim Überführen des Schieberteils von der Freigabestellung in die Riegelstellung die Enden der Anlagearme in den kompatiblen Aussparungen des Festteils aufgenommen werden.

Für eine schnelle, einfache und kostengünstige Produktion des Keilschiebers können vorteilhafterweise das Schieberteil und das Festteil als Kunststoff-Spritzgussteile, insbesondere aus Polyamid und optional mit einem Glasfaseranteil, ausgebildet sein.

Bei der erfindungsgemäßen Steckverbindung ist weiterhin auch gewährleistet, dass ein Verriegeln nur dann möglich ist, wenn sich das Halteelement sicher in seiner Haltestellung befindet. Dies führt zu einer absolut sicheren Steckkontrolle.

Durch die erfindungsgemäßen Ausführungen können die Ver- und Entriegelungskräfte optimal eingestellt werden. Weiterhin wird die Einrastfunktion in der Halte- und Lösestellung verbessert. Eine weitere vorteilhafte Eigenschaft der Erfindung ist eine verbesserte Lösbarkeit des Systems, insbesondere mit einem handelsüblichen Schraubendreher und eine Kostenreduzierung durch die Herstellung der Keilschieberelemente im Kunststoffspritzgussverfahren.

Weitere insbesondere vorteilhafte Ausgestaltungen der Erfindung sind in den abhängigen Ansprüchen und der anschließenden Beschreibung enthalten. Weitere vorteilhafte Ausgestaltungen der Erfindung ergeben sich aus der folgenden Figurenbeschreibung und den abhängigen Unteransprüchen.

An Hand von zwei in der Zeichnung veranschaulichten, bevorzugten Ausführungsbeispielen soll die Erfindung im Folgenden genauer erläutert werden.

### Dabei zeigen:

- Fig. 1 bis 3: Darstellungen einer erfindungsgemäßen Steckverbindung in unterschiedlichen Montagestellungen während des Steck- und Verriegelungsvorganges,
- Fig. 4 bis 5: Darstellungen einer ersten Ausführungsform eines erfindungsgemäßen, am Stecker montierten Keilschiebers in der Freigabestellung und der Riegelstellung,
- Fig. 6 bis 7: Darstellungen des Festteils und des Schieberteils der ersten Ausführungsform des erfindungsgemäßen Keilschiebers,
- Fig. 8 bis 9: Darstellungen einer zweiten Ausführungsform eines erfindungsgemäßen, am Stecker montierten Keilschiebers in der Riegelstellung und der Freigabestellung,
- Fig. 10 bis 12: Darstellungen des Festteils und des Schieberteils der zweiten Ausführungsform des erfindungsgemäßen Keilschiebers,
- Fig. 13: eine Perspektivansicht einer Ausführungsform eines Halteelements gemäß der Erfindung,
- Fig. 14: eine Draufsicht auf die erste erfindungsgemäße Ausführungsform des Keilschiebers gemäß Figur 5 und
- Fig. 15: eine Draufsicht auf die zweite erfindungsgemäße Ausführungsform des Keilschiebers gemäß Figur 9.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

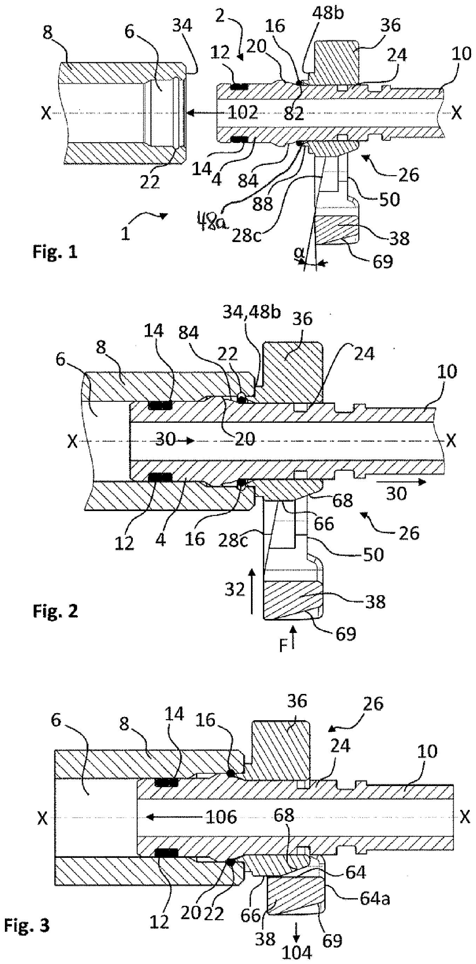

Wie in Fig. 1 bis 3 dargestellt, weist eine erfindungsgemäße Steckverbindung 1 ein Steckerteil 2 auf, das mit einem Steckerschaft 4 umfangsgemäß dichtend in Richtung einer Steckachse X in eine Aufnahmeöffnung 6 eines Gehäuseteils 8 einsteckbar ist. An dem Steckerteil 2 kann auf seiner dem Steckerschaft 4 gegenüberliegenden Seite eine Fluid-Leitung 10 angeschlossen sein, beispielhaft dargestellt in Fig. 1 bis 3. Das Gehäuseteil 8 kann Bestandteil eines beliebigen Aggregates sein oder ebenfalls mit einer Leitung verbunden werden. Zur umfangsgemäßen Abdichtung in der Aufnahmeöffnung 6 kann der Steckerschaft 4 vorteilhaft in seinem freien Endbereich einen Dichtring 12 und gegebenenfalls einen Stützring 14 tragen. Der Dichtring 12 dichtet einen Ringspalt zwischen Steckerschaft 4 und Aufnahmeöffnung 6 nach außen druckdicht ab.

Das Steckerteil 2 ist in einer mit dem Steckerschaft 4 in das Gehäuseteil 8 eingesteckten Verbindungsstellung mittels einer Verriegelungseinrichtung zum lösbaren Arretieren des Steckerteils 2 in seiner eingesteckten Verbindungslage arretiert. Die Verriegelungseinrichtung besteht aus einem auf dem Steckerschaft 4 angeordneten, radial verformbaren Halteelement 16 und einem auf dem Steckerteil 2 in einem axial zwischen dem Halteelement 16 und einem Widerlagerelement 24 des Steckerteils 2 liegenden Bereich quer zur Steckachse X verschiebbaren Keilschieber 26.

Das Halteelement 16 und der Steckerschaft 4 sind in axialer Richtung (entsprechend der Steckachse X) relativ zueinander derart zwischen einer Lösestellung, dargestellt in Fig. 1 und 2, und einer Haltestellung, dargestellt in Fig. 3, bewegbar, dass der Steckerschaft 4 einerseits in der Lösestellung zusammen mit dem Halteelement 16 in die Aufnahmeöffnung 6 einführbar oder aus der Aufnahmeöffnung 6 entnehmbar und andererseits in der Haltestellung formschlüssig in seiner Verbindungslage arretiert ist, indem das Halteelement 16 zumindest bereichsweise formschlüssig zwischen korrespondierenden Halteflächen 20 und 22 der Aufnahmeöffnung 6 und des Steckerschaftes 4 sitzt.

Der Keilschieber 26 besteht aus einem Festteil 36 und einem Schieberteil 38 und dient dazu, in einer Riegelstellung die beschriebene axiale Relativbewegung zwischen dem Halteelement 16 und dem Steckerschaft 4 in deren Haltestellung gegen ein Überführen in die Lösestellung formschlüssig zu blockieren. Hierbei muss der Keilschieber 26 lediglich relativ geringe äußere Kräfte zwischen Stecker 2 und Gehäuseteil 8 entgegen der Druckrichtung, nicht aber höhere Innendruckkräfte aufnehmen.

Der Keilschieber 26 ist auf dem Steckerteil 2 zwischen einer Freigabestellung und der Riegelstellung beweglich angeordnet und dabei erfindungsgemäß derart ausgebildet, dass dieser während der Bewegung in eine Schubrichtung 32 von der Freigabestellung in die Riegelstellung auch als Betätigungs- bzw. Antriebselement für eine Zwangsbewegung des Halteelements 16 und des Steckerschafts 4 aus deren Lösestellung in deren Haltestellung dient. Die Zwangsbewegung wird erzeugt, indem das Festteil 36 mit einer Lochöffnung 40 unverlierbar auf dem Steckerteil 2 sitzt und das Festteil 36 und das Schieberteil 38 korrespondierende Keilflächen 28b, 28c aufweisen. Beim Überführen des Schieberteils 38 von der Freigabestellung in die Riegelstellung gleiten die Keilflächen 28c des Schieberteils 38 der Anlagearme 42 über die Keilflächen 28b des Festteils 36 und vergrößern dadurch einen axialen Abstand zwischen dem Halteelement 16 und dem Widerlagerelement 24. Dieser Ablauf ist in den Fig. 1 bis 3 dargestellt.

Die Keilfläche 28 des Keilschiebers 26 schließt, wie in Figur 1 dargestellt, mit einer zur Steckachse X senkrechten Ebene einen Keilwinkel α ein. Dieser Keilwinkel α beträgt z. B. 11°. Durch diese Ausgestaltung vergrößert der Keilschieber 26 bei seiner Querverschiebung für die beschriebene Zwangsbewegung über die Keilfläche 28 den axialen Abstand zwischen dem Halteelement 16 und dem Widerlagerelement 24 des Steckerteils 2. Hierdurch wird der Steckerschaft 4 relativ zu dem Halteelement 16 bewegt, und zwar in Pfeilrichtung 30, zurückgezogen. Vorteilhafterweise wird hierdurch eine Kraftverstärkung erreicht, da mit einer relativ kleinen Kraft der Keilschieber 26 quer in Pfeilrichtung 32 bewegt werden kann, um die axiale Zugbewegung des Steckerteils 2 in Pfeilrichtung 30 zu bewirken.

Erfindungsgemäß weist das Schieberteil 38 Anlagearme 42 und das Festteil 36 Führungsmittel 44, welche sich insbesondere beidseitig des Festteils 36 quer zur Steckachse X erstrecken, zur Anlage und Führung der Anlagearme 42 des Schieberteils 38 auf. Das Festteil 36 und das Schieberteil 38 weisen ineinandergreifende Rastmittel 46b, 46c und/oder 62b, 62c zum unverlierbaren Halten in der Freigabe- und der Riegelstellung auf.

Insbesondere weisen das Festteil 36 und das Schieberteil 38 auf ihren einander gegenüberliegenden Seiten insbesondere zueinander parallele Anlageflächen 48a, 48b, 50 auf. Hierbei ist eine ringförmige Anlagefläche 48a des Festteils 36 zur Anlage an dem Halteelement 16 und eine Anlagefläche 48b des Festteils 36 zur Anlage an einer die Aufnahmeöffnung 6 umschließenden Stirnfläche 34 des Gehäuseteils 8 ausgebildet. Weiterhin ist eine Anlagefläche 50 des Schieberteils 38 zur Anlage an dem Widerlagerelement 24 des Steckerteils 2 ausgebildet.

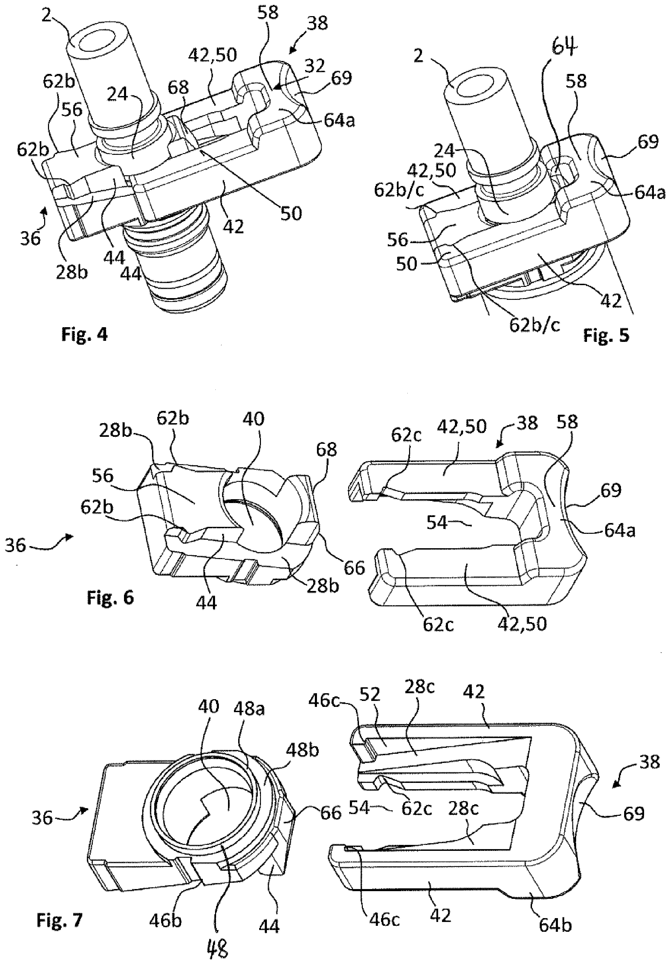

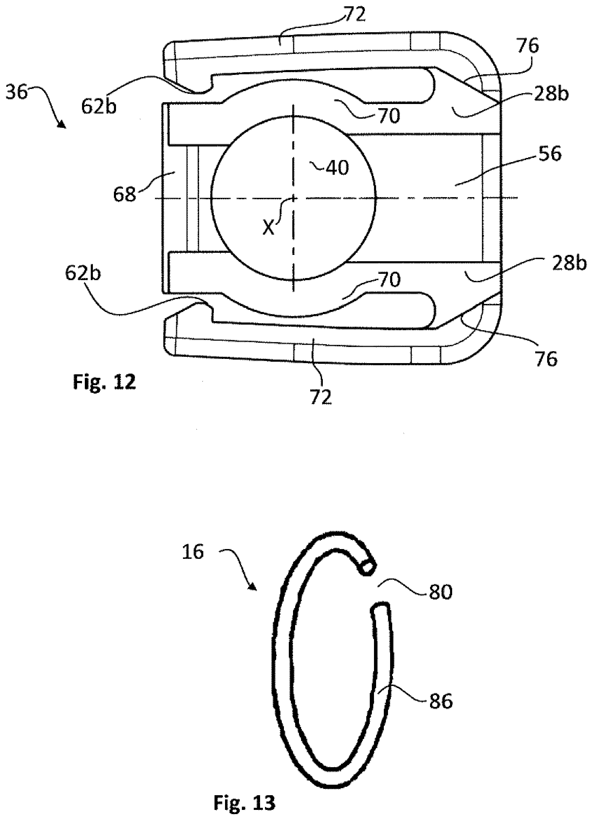

Das Halteelement 16, siehe Fig. 13, wird von einem Drahtsprengring 86 aus einem Federdraht mit bevorzugt kreisförmigem Ringquerschnitt gebildet. Das Festteil 36 greift mit einem axialen Ringabschnitt 48 zur Anlage mit seiner ringförmigen Anlagefläche 48a an dem Drahtsprengring 86 in die Aufnahmeöffnung 6 ein (Fig. 1, Fig. 7). Der axiale Ringabschnitt 48 erstreckt sich von der Anlagefläche 48b in Einsteckrichtung 102.

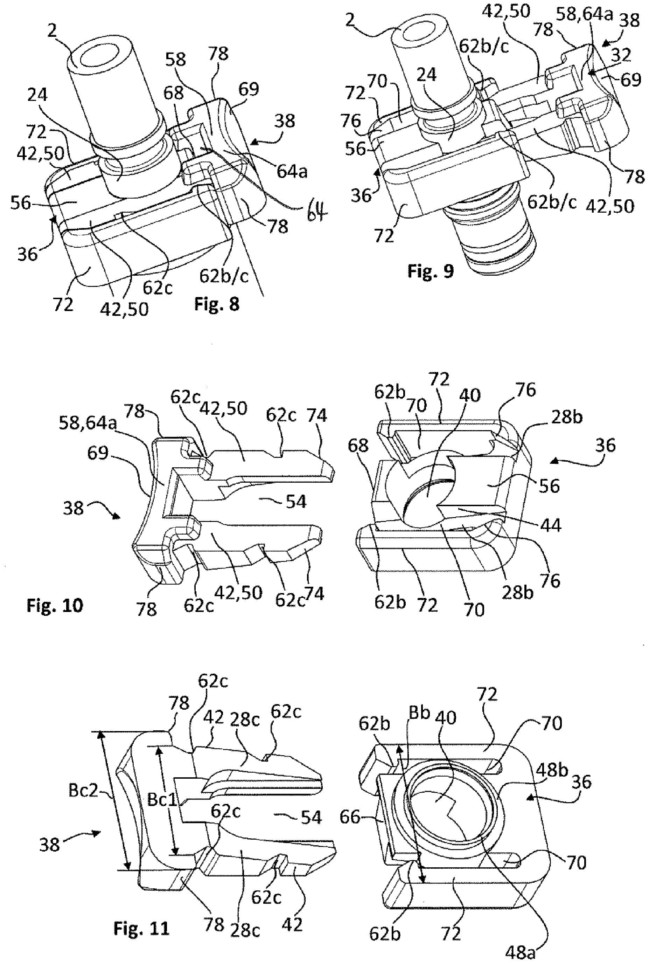

Insbesondere bilden die Führungsmittel 44 des Festteils 36 auf den der Anlagefläche 48a, 48b abgewandten Seite eine zu den Anlagefläche 48a, 48b parallele und stets sichtbare Oberfläche 56, durch die die Lochöffnung 40 führt. Hierbei verlaufen die Keilflächen 28b seitlich zur sichtbaren Oberfläche 56 und sind unterhalb zu der sichtbaren Oberfläche 56 ebenenversetzt angeordnet. Die Keilflächen 28b enden dabei an den Führungsmitteln 44, siehe Fig. 6 und 10. Die sichtbare Oberfläche 56 verhindert ein Eindringen von Fremdkörpern in den Keilschieber 26 und verstärkt das Festteil 36. Insbesondere liegen die Anlageflächen 50 der Anlagearme 42 des Schieberteils 38 in der Riegelstellung in einer Ebene zusammen mit der sichtbaren Oberfläche 56 der Führungsmittel 44, wie in den Fig. 5 und 8 dargestellt.

Wie in den Fig. 4 und 5 bzw. 8 und 9 ersichtlich, sitzt das Schieberteil 38 vorzugsweise mit einer Schlitzöffnung 54, welche von den zwei Anlagearmen 42 gebildet wird, auf dem Steckerteil 2. Vorteilhafterweise liegt dabei das Widerlagerelement 24 des Steckerteils 2 auf den Anlageflächen 50 der Anlagearme 42. Eine vorteilhafte Gestaltungsvariante der Erfindung ist, dass in der Riegelstellung die von den Anlagearmen 42 des Schieberteils 38 gebildete Schlitzöffnung 54 in Riegelstellung, wie in den Fig. 5 und 8 abgebildet, insbesondere vollständig durch die Führungsmittel 44 und das Widerlagerelement 24 ausgefüllt ist. Dadurch wird das Eindringen von Fremdkörpern zusätzlich erschwert. Weiterhin lässt sich der Verriegelungsvorgang dadurch derart überprüfen, dass Spalte und Unebenheiten dem Anwender leicht auffallen, was auf einen Bauteilfehler oder eine falsche Montage hinweist.

Die Anlagearme 42 des Schieberteils 38 laufen in einem Übergangsstück 58 zusammen. Gemäß einer vorteilhaften Ausführung kann insbesondere im Bereich des Übergangsstücks 58 der Keilschieber 26 für seine Bewegung aus der Riegelstellung in die Freigabestellung einen Betätigungsangriff 64, insbesondere in Form eines Eingriffspalts, wie er in den Fig. 5 und 8 dargestellt ist für ein Lösewerkzeug aufweisen. Vorzugsweise ist der Eingriffspalt zwischen dem Schieberteil 38 und dem Festteil 36, insbesondere zwischen dem Biegegelenk 58 und dem Festteil 36, ausgebildet. Vorzugsweise wird der Eingriffspalt dadurch erzeugt, dass das Festteil 36 eine Fläche 66 ausgebildet hat. Gemäß der in den Figuren 1 bis 7 dargestellten bevorzugten Ausführungsform kann die Fläche 66 als Anschlagfläche ausgebildet sein, an der das Übergangsstück 58 des Schieberteils 38 in Riegelstellung anliegt. Die Fläche 66 erstreckt sich insbesondere parallel zur Steckachse X in Richtung der sichtbaren Oberfläche 56 und geht in einem, in Richtung Lochöffnung 40 abgewinkelten Eingriffabschnitt 68 in die sichtbare Oberfläche 56 des Festteils 36 über. Insbesondere kann in den Betätigungsangriff 64 mit einem handelsüblichen Schraubendreher eingegriffen werden, wodurch eine Überführung des Schieberteils 38 ausgehend von der Riegelstellung in die Freigabestellung bewirkt wird. Durch den Betätigungsangriff 64 wird eine geeignete Angriffsfläche für eine Hebelwirkung geschaffen, wodurch die Bewegung des Schieberteils 38 aus der Riegelstellung heraus in die Lösestellung auf einfachste Art ermöglicht wird.

Vorzugsweise hat unter diesem Aspekt das Schieberteil 38 einen Betätigungsknoten 64a ausgebildet, welcher axial zur Steckachse X vom Schieberteil 38 hervorsteht und den Betätigungsangriff 64 vergrößert. Mittels des Betätigungsknotens 64a wird die Angriffsfläche des Betätigungsangriffs 64 für das Lösewerkzeug, insbesondere für die Hebelfunktion, vergrößert.

Für eine vereinfachte Überführung des Schieberteils 38 aus der Freigabestellung in die Riegelstellung weist gemäß einer vorteilhaften Ausführung das Schieberteil 38 an seiner vom Festteil 36 abgewandten Seite eine Druckmulde 69 auf, welche in Schubrichtung 32 konkav ausgebildet ist. Durch die Druckmulde 69 wird insbesondere die Handbetätigung vereinfacht und Montagesicherheit verbessert.

Zu bevorzugen ist es, wenn das Festteil 36 erste Rastmittel 46b und/oder zweite Rastmittel 62b und die Anlagearme 42 des Schieberteils 38 erste Rastmittel 46c und/oder zweite Rastmittel 62c zum Halten des Schieberteils 38 in der Freigabestellung und der Riegelstellung aufweisen.

Eine erste vorteilhafte Ausführungsform des Keilschiebers 26 ist in den Fig. 4 bis 7 dargestellt. Dabei sind die Anlagearme 42 des Schieberteil 38 federelastisch ausgebildet und weisen beidseitig der Keilflächen 28c, deutlich ersichtlich in Fig. 7, Seitenwände 52 auf, die gemeinsam mit den Keilflächen 28c eine Aufnahmevertiefung zur bereichsweisen Aufnahme des Festteils 36 bilden. Somit übergreift das Schieberteil 38 das Festteil 36 bereichsweise, insbesondere umgreifen die Anlagearme 42 des Schieberteils 38 die Führungsmittel 44 des Festteils 36, wobei insbesondere die Anlageflächen 50 der Anlagearme 42 und die sichtbare Oberfläche 56 der Führungsmittel 44 in Riegelstellung, wie in Fig. 5, in einer Ebene liegen.

Gemäß der ersten Ausführungsform weisen die Führungsmittel 44 des Festteils 36 radial zur Steckachse X nach außen weisende, insbesondere als Verriegelungsnasen ausgebildete, zweite Rastmittel 62b auf, die in komplementär ausgebildete zweite Rastmittel 62c, insbesondere Aussparungen in den Anlagearmen 42 des Schieberteils 38, eingreifen können. Dabei dienen die zweiten Rastmittel 62b, 62c an den Führungsmitteln 44 und an den Anlagearmen 42 der Fixierung des Schieberteils 38 in Riegelstellung, dargestellt in Fig. 5, und bilden eine lösbare, insbesondere kraftformschlüssige Verbindung. Dadurch wird das sichere Halten in der Riegelstellung verbessert.

Eine besonders vorteilhafte Anordnung der zweiten Rastmittel 62c an den Anlagearmen 42, verdeutlicht in Fig. 6, ist dabei eine radial zur Steckachse X gemessen, möglichst weit von dem Biegegelenk entfernte Positionierung. Dies ermöglicht, die Einrastkräfte am Steckerteil 2 zu erhöhen und gleichzeitig über den langen Hebelarm der Anlagearme 42 die Steckkräfte der zweiten Rastmittel 62b, 62c niedrig zu halten. Insbesondere ist es vorteilhaft, wenn die zweiten Rastmittel 62b, 62c in Riegelstellung radial zur Steckachse X in Schubrichtung 32 des Schieberteils 38 beim Überführen aus der Freigabestellung in die Riegelstellung betrachtet, hinter der Lochöffnung 40 ausgebildet sind. Noch vorteilhafter ist, wenn die zweiten Rastmittel 62b, 62c hinter der Lochöffnung 40 und soweit wie möglich am Ende der Anlagearme 42, sowie am dazu korrespondierenden Ende der Führungsmittel 44 des Festteils 36 ausgebildet sind.

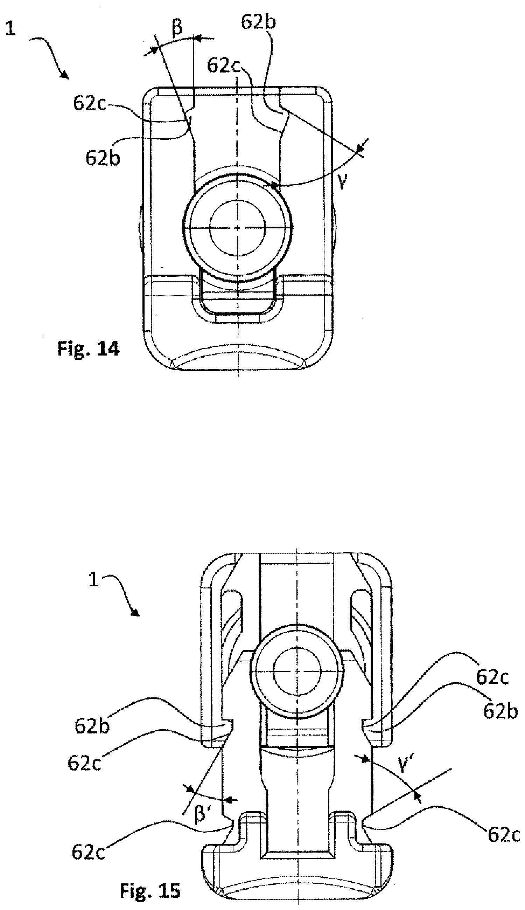

Vorteilhafterweise sind, wie in Fig. 6 dargestellt, die zweiten Rastmittel 62b an den Führungsmitteln 44 des Festteils 36 als Verriegelungsnasen ausgebildet, die in korrespondierende, als Aussparungen 62c ausgebildete, zweite Rastmittel in den Anlagearmen 42 des Schieberteils 38 einrasten. Die Verriegelungsnasen 62b weisen hierbei, wie in Fig. 14 dargestellt, einen Verriegelungswinkel β und ein Entriegelungswinkel γ auf, wobei die Aussparungen 62c korrespondierend zu den Winkeln β, γ ausgebildet sind. Insbesondere lassen sich die Steckkräfte und die Lösekräfte der zweiten Rastmittel 62b, 62c bei einer derartigen Gestaltung durch Veränderung der Winkel β, γ der Verriegelungsnasen 62b und der korrespondierenden Aussparungen 62c beliebig einstellen. Durch Wahl eines kleinen Verriegelungswinkels β an der Verriegelungsnase 62b lassen sich kleine Verriegelungskräfte und durch große Verriegelungswinkel β große Verriegelungskräfte erzielen. Durch Wahl eines kleinen Entriegelungswinkels γ an der Verriegelungsnase 62b lassen sich kleine Entriegelungskräfte und durch große Entriegelungswinkel γ große Entriegelungskräfte erzielen.

Hinsichtlich einer ausgewogenen Balance zwischen Verriegelungskräften und Entriegelungskräften beträgt der Verriegelungswinkel β 10° bis 50° und der Entriegelungswinkel γ 45° bis 85°, vorzugsweise beträgt der Verriegelungswinkel β 20° bis 40° und der Entriegelungswinkel γ 55° bis 75°, und besonders bevorzugt beträgt der Verriegelungswinkel β 30° und der Entriegelungswinkel γ 65°.

Gemäß der ersten Ausführungsform ist es weiterhin vorteilhaft, wenn, wie in Fig. 7 abgebildet, die Seitenwände 52 der Anlagearme 42 des Schieberteils 3, jeweils an der Schlitzöffnung 54 ein radial zur Steckachse X nach innen gerichtetes erstes Rastmittel 46c aufweisen. Vorzugsweise bilden die ersten Rastmittel 46c jeweils das Ende der Anlagearme 42 des Schieberteils 38 und enden in der Verriegelungsposition insbesondere im Außenbereich bündig mit dem Festteil 36. In dieser besonderen Ausführungsform hat das Festteil 36 zu den ersten Rastmitteln 46c des Schieberteils 38 kompatible erste Rastmittel 46b, insbesondere Vorsprünge, die beidseitig am Festteil 36 im Außenbereich der Keilflächen 28b und parallel zur Steckachse X verlaufend angeordnet sind. Greifen die ersten Rastmittel 46b, 46c des Schieberteils 38 und des Festteils 36 ineinander, wird das Schieberteil 38 in Freigabestellung verlustsicher an dem Festteil 36 gehalten.

In einer zweiten Ausführungsform der Steckverbindung gemäß den Darstellungen der Fig. 8 bis 12 bildet das Festteil 36 einen Führungskanal 70 für die Anlagearme 42 des Schieberteils 38. Hierbei weist das Festteil 36 zusätzlich zu den innenliegenden Führungsmitteln 44 seitlich von selbigen beabstandet federelastische Führungsarme 72 auf, wodurch sich der Führungskanal 70 zwischen den innenliegenden Führungsmitteln 44 und den federelastischen Führungsarmen 72 bildet. Hierbei ist der Führungskanal 70 in Länge und Breite gemäß den Maßen der Anlagearme 42 des Schieberteils 38 derartig ausgebildet, dass die Anlagearme 42 in der Riegelstellung formschlüssig in dem Führungskanal 70 positioniert sind. In dieser Ausführungsform sind die Keilflächen 28b in dem Führungskanal 70 angeordnet, und enden wie bei der ersten Ausführungsform an den inneren Führungsmitteln 44 des Festteils 36.

Gemäß der zweiten Ausführungsform ist es vorteilhaft vorgesehen, dass die Anlagearme 42 des Schieberteils 38 keine Aufnahmevertiefung entsprechend der ersten Ausführungsform bilden, sondern, wie in Fig. 11 dargestellt, insbesondere in Richtung der Steckachse X vollständig keilförmig ausgebildet sind. Zu bevorzugen ist es, dass die Anlagearme 42 zu ihrem jeweiligen Ende hin auch radial zur Steckachse X keilförmig ausgebildet sind, siehe Fig. 10, Flächen 74. Das Festteil 36 weist derart bemessene Aussparungen 76 auf, dass beim Überführen des Schieberteils 38 von der Freigabestellung in die Riegelstellung die Anlagearme 42, wie in den Fig. 8 und 9 dargestellt, mit ihren Keilflächen 28c über die Keilflächen 28b des Festteils 36 gleiten. Dabei werden diese jeweils von beiden Seiten, radial zur Steckachse X, geführt und die keilförmigen Enden 74 der Anlagearme 42 werden in den kompatiblen Aussparungen 76 des Festteils aufgenommen. In der Riegelstellung liegen vorzugsweise die Anlageflächen 50 der Anlagearme 42 des Schieberteils 38 und die sichtbare Oberfläche 56 der inneren Führungsmittel 44 sowie die Oberfläche der außenliegenden Führungsarme 72 des Festteils 36 in einer Ebene.

In vorteilhafter Weise können gemäß der zweiten Ausführungsform die äußeren federelastischen Führungsarme 72 des Festteils 36 radial zur Steckachse X nach innen gerichtete zweite Rastmittel 62b zum Halten des Schieberteils 38 in der Riegelstellung und der Freigabestellung besitzen. Das Schieberteil 38 weist an den Anlagearmen 42 radial zur Steckachse X nach außen gerichtete zweite Rastmittel 62c zum Halten des Schieberteils in der Riegelstellung und der Freigabestellung auf. Insbesondere sind die zweiten Rastmittel 62c an den Anlagearmen 42 jeweils als zwei über die Länge des jeweiligen Anlagearms beabstandete Aussparungen 62c und die zweiten Rastmittel 62b der federelastischen Führungsarme 72 jeweils als eine Verriegelungsnase 62b ausgebildet. Hierbei ist die Verriegelungsnase 62b jeweils am Ende der Führungsarme 72 angeordnet und ragt in den Führungskanal 70 hinein. Diese vorteilhafte Anordnung der zweiten Rastmittel 62b bzw. 62c ist in Fig. 10 ersichtlich. Durch die Doppelfunktion der zweiten Rastmittel 62b, c können die ersten Rastmittel 46b, c der ersten Ausführungsform entfallen. Vorzugsweise weisen, wie in Figur 15 dargestellt, die Verriegelungsnase 62b einen Verriegelungswinkel β' und die Aussparungen 62c einen Entriegelungswinkel γ' auf. Insbesondere lassen sich die Steckkräfte und die Lösekräfte der zweiten Rastmittel 62b, 62c bei einer derartigen Gestaltung durch Veränderung der Winkel β', γ' der Verriegelungsnasen 62b und der korrespondierenden Aussparungen 62c beliebig einstellen. Durch Wahl eines kleinen Verriegelungswinkels β' an der Verriegelungsnase 62b lassen sich kleine Verriegelungskräfte' und durch große Verriegelungswinkel β' große Verriegelungskräfte erzielen. Durch Wahl eines kleinen Entriegelungswinkels γ' an der Aussparung 62c lassen sich kleine Entriegelungskräfte und durch große Entriegelungswinkel γ' große Entriegelungskräfte erzielen. Weiterhin vorteilhaft ist bei dieser Gestaltung, dass auf die ersten Rastmittel am Schieberteil 38 und am Festteil 36 verzichtet werden kann, so dass nur ein Typ von Rastmitteln erforderlich ist.

Hinsichtlich einer ausgewogenen Balance zwischen Verriegelungskräften und Entriegelungskräften beträgt der Verriegelungswinkel β' 10° bis 50° und der Entriegelungswinkel γ' 45° bis 85°, vorzugsweise beträgt der Verriegelungswinkel β' 20° bis 40° und der Entriegelungswinkel γ' 55° bis 75°, und besonders bevorzugt beträgt der Verriegelungswinkel β' 30° und der Entriegelungswinkel γ' 65°.

Die Rastverbindungen bei der zweiten Ausführungsform können dadurch verbessert werden, dass die federelastischen Führungsarme 72, wie in Fig. 12 dargestellt, radial zur Steckachse X nach innen gekrümmt ausgebildet sind. Hierdurch greifen die nach innen gerichteten zweiten Rastmittel 62b zum Halten des Schieberteils 38 mit einer Vorspannung in die radial zur Steckachse X nach außen gerichteten zweiten Rastmittel 62c an den Anlagearmen 42 ein.

Gemäß der zweiten Ausführungsform kann es von Vorteil sein, wenn an dem U-förmigen Übergangsstück 58 der Anlagearme 42 des Schieberteils 38 Höcker 78 seitlich zur Schubrichtung 32 des Schieberteils 38, beim Überführen aus der Freigabestellung in die Riegelstellung betrachtet, ausgebildet sind. Die Höcker 78 an den Anlagearmen 42, dargestellt in Fig. 11, ragen über eine Breite Bc1 des Schieberteils 38 hinaus, wobei eine Gesamtbreite Bc2 des Schieberteils 38, gemessen radial zur Steckachse X, zwischen den an dem Übergangsstück 58 jeweils ausgebildeten Höckern 78 gebildet wird. In der Riegelstellung sind durch die Höcker 78 an den Anlagearmen 42 die Führungsarme 72 vor Stößen und anderen äußeren Einflüssen gesichert. Insbesondere entspricht die Gesamtbreite Bc2 des Schieberteils 38, gemessen radial zur Steckachse X, zwischen den an dem Übergangsstück 58 jeweils ausgebildeten Höckern 78, einer Breite Bb des Festteils 36 inklusive der Führungsarme 72. Vorteilhaft sind dadurch die Führungsarme 72 vor Umwelteinflüssen geschützt.

Das Festteil 36 und das Schieberteil 38 sind vorzugsweise als jeweils einstückige Formteile, insbesondere als Kunststoff-Spritzgussteile, insbesondere aus Polyamid ausgebildet. Eine vorteilhafte Ausführung sieht weiterhin vor, dass das Schieberteil 38 und das Festteil 36 als Kunststoff-Spritzgussteile mit einem Glasfaseranteil ausgebildet sind.

Im Zusammenhang mit der Erfindung können beliebige Ausführungen für das Halteelement 16 vorgesehen sein. Allgemein ist das Halteelement 16 insbesondere aus Federstahl und ringförmig mit einer an einer Umfangsstelle vorgesehenen, durchgehenden Schlitzunterbrechung 80 und dadurch federelastisch radial verformbar ausgebildet. Beispielhaft ist ein Halteelement 16 in Figur 13 dargestellt. Das ringförmige Halteelement 16 sitzt mit einer radial nach innen gerichteten Federvorspannung auf dem Steckerschaft 4, wobei in der Lösestellung das Halteelement 16 in einer Ringvertiefung 82 des Steckerschaftes 4 sitzt. Durch die Relativbewegung des Steckerschaftes 4 in die Haltestellung wird das Halteelement 16 über eine Konusfläche 84 des Steckerschaftes 4 gegen seine Federvorspannung radial federelastisch gespreizt, bis es formschlüssig zwischen den Halteflächen 20, 22 sitzt. Dieser Ablauf ist in den Zustandsdarstellungen in den Fig. 1 bis 3 dargestellt.

Abschließend soll noch anhand der Fig. 1 bis 3 die Funktion der erfindungsgemäßen Steckverbindung erläutert werden. Wie aus Fig. 1 ersichtlich, kann der Steckerschaft 4 zusammen mit dem sich in der Lösestellung befindenden Halteelement 16 in die Aufnahmeöffnung 6 eingesteckt werden (Pfeilrichtung 102). Der Keilschieber 26 befindet sich dabei natürlich in seiner Freigabestellung. Das Einstecken wird - bevorzugt durch Anlage des Keilschiebers 26 am Gehäuseteil 8 - begrenzt. Aus dieser Stellung heraus wird wie in Fig. 2 abgebildet, der Keilschieber 26 bzw. das Schieberteil 38 manuell radial in Pfeilrichtung 32 eingeschoben, wodurch zwangsweise das Steckerteil 2 in Pfeilrichtung 30 zurückgezogen wird. Dadurch wird über die Konusfläche 84 das Halteelement 16 radial gespreizt und in seine Haltestellung gemäß Fig. 3 gebracht. Diese Stellung wird formschlüssig durch den Keilschieber 26 verriegelt. Soll nun ausgehend von der verriegelten Verbindungslage das Steckerteil 2 gelöst werden, so wird dazu der Keilschieber 26 bzw. das Schieberteil 38 mittels eines geeigneten Werkzeugs in Pfeilrichtung 104 in seine Freigabestellung bewegt. Dadurch kann dann der Steckerschaft 4 in Pfeilrichtung 106 weiter in die Aufnahmeöffnung 6 eingeschoben werden, wodurch das Halteelement 16 über die Konusfläche 84 wieder in den Bereich der Ringvertiefung 82 gelangt und sich dadurch radial nach innen verengt. Es ist dann wieder der Freigabezustand, welcher in Fig. 2 abgebildet ist, erreicht, so dass das Steckerteil 2 entgegen der Pfeilrichtung 102 entnommen werden kann.

Die Erfindung ist nicht auf die dargestellten und beschriebenen Ausführungsbeispiele beschränkt, sondern umfasst auch alle Ausführungen im Sinne der Erfindung nach Anspruch 1. Vor allem können die Ausführungen des Halteelementes 16 und des Keilschiebers 26 beliebig miteinander kombiniert werden.

### Bezugszeichenliste

- 1: Steckverbindung
- 2: Steckerteil
- 4: Steckerschaft
- 6: Aufnahmeöffnung
- 8: Gehäuseteil
- 10: Fluidleitung
- 12: Dichtring
- 14: Stützring
- 16: Halteelement
- 20: Haltefläche vom Stecker
- 22: Haltefläche vom Gehäuse
- 24: Widerlagerelement
- 26: Keilschieber
- 28b: Keilfläche Festteil
- 28c: Keilfläche Schieberteil
- 30: Rückzugsbewegungsrichtung Stecker
- 32: Schubrichtung des Schieberteils beim Überführen aus der Freigabestellung in die Riegelstellung
- 34: Stirnfläche des Gehäuseteils
- 36: Festteil
- 38: Schieberteil
- 40: Lochöffnung
- 42: Federelastische Anlagearme
- 44: Führungsmittel
- 46b: Erstes Rastmittel Festteil
- 46c: Erstes Rastmittel Schieberteil
- 48: Axialer Ringabschnitt
- 48a: Anlagefläche zum Halteelement
- 48b: Anlagefläche zum Gehäuseteil
- 50: Anlagefläche Schieberteil
- 52: Seitenwände
- 54: Schlitzöffnung
- 56: Sichtbare Oberfläche der Führungsmittel
- 58: Übergangsstück bzw. Biegegelenk
- 62b: Zweites Rastmittel Festteil
- 62c: Zweites Rastmittel Schieberteil
- 64: Betätigungsangriff
- 64a: Betätigungsknoten
- 66: Fläche
- 68: Eingriffabschnitt
- 69: Druckmulde
- 70: Führungskanal
- 72: Federelastische Führungsarme
- 74: Keilförmiges Ende der Anlagearme
- 76: Aussparungen für die Enden der Anlagearme
- 78: Höcker
- 80: Schlitzunterbrechung
- 82: Ringvertiefung im Steckerschaft
- 84: Konusfläche am Steckerschaft
- 86: Drahtsprengring
- 102: Einsteckrichtung Steckerschaft in Aufnahmeöffnung
- 104: Bewegung Schieberteil in Freigabestellung
- 106: Bewegung Steckerschaft in die Aufnahmeöffnung

- X: Steckachse
- α: Keilwinkel
- β, β': Verriegelungswinkel
- γ, γ': Entriegelungswinkel
- F: Kraft auf Keilschieber in Schubrichtung 32
- Bb: Breite des Festteils inklusive Führungsarmen
- Bc1: Breite des Schieberteils ohne Höcker
- Bc2: Breite des Schieberteils inklusive Höcker

## Patentansprüche

1. Steckverbindung für Fluid-Leitungen, mit einem Steckerteil (2), das mit einem Steckerschaft (4) umfangsgemäß abgedichtet in Richtung einer Steckachse (X) in eine Aufnahmeöffnung (6) eines Gehäuseteils (8) einsteckbar ist, und mit einer Verriegelungseinrichtung zum lösbaren Arretieren des Steckerteils (2) in seiner eingesteckten Verbindungslage, wobei die Verriegelungseinrichtung aus einem auf dem Steckerschaft (4) angeordneten, radial verformbaren Halteelement (16) und einem auf dem Steckerteil (2) in einem axial zwischen dem Halteelement (16) und einem Widerlagerelement (24) des Steckerteils (2) liegenden Bereich quer zur Steckachse (X) verschiebbaren Keilschieber (26) besteht, wobei das Halteelement (16) und der Steckerschaft (4) in axialer Richtung relativ zueinander derart zwischen einer Lösestellung und einer Haltestellung bewegbar sind, dass der Steckerschaft (4) in der Lösestellung in die Aufnahmeöffnung (6) einführbar und aus der Aufnahmeöffnung (6) entnehmbar ist und in der Haltestellung formschlüssig in seiner Verbindungslage arretierbar ist, indem das Halteelement (16) zumindest bereichsweise formschlüssig zwischen korrespondierenden Halteflächen (20, 22) der Aufnahmeöffnung (6) und des Steckerschaftes (4) sitzt, und wobei der Keilschieber (26) aus einem Festteil (36) und einem Schieberteil (38) gebildet ist und in einer Riegelstellung die axiale Relativbewegung zwischen dem Halteelement (16) und dem Steckerschaft (4) in der Haltestellung gegen ein Überführen in die Lösestellung formschlüssig blockiert, wobei der Keilschieber (26) relativ zu dem Steckerteil (2) zwischen einer Freigabestellung und der Riegelstellung beweglich sowie derart ausgebildet ist, dass dieser während der Bewegung in einer Schubrichtung (32) von der Freigabestellung in die Riegelstellung auch als Antriebselement für eine Zwangsbewegung von Halteelement (16) und Steckerschaft (4) aus deren Lösestellung in deren Haltestellung fungiert, indem das Festteil (36) mit einer Lochöffnung (40) unverlierbar auf dem Steckerteil (2) sitzt, wobei das Festteil (36) und das Schieberteil (38) korrespondierende Keilflächen (28b, 28c) aufweisen, und beim Überführen des Schieberteils (38) von der Freigabestellung in die Riegelstellung Anlagearme (42) mit ihren Keilflächen (28c) über die Keilflächen (28b) des Festteils (36) gleiten und einen axialen Abstand zwischen dem Halteelement (16) und dem Widerlagerelement (24) vergrößern,
**dadurch gekennzeichnet, dass** das Schieberteil (38) die Anlagearme (42) und das Festteil (36) Führungsmittel (44) zur Anlage und Führung der Anlagearme (42) des Schieberteils (38) aufweisen, und das Festteil (36) und das Schieberteil (38) ineinandergreifende Rastmittel (46b, 46c und/oder 62b, 62c) zum unverlierbaren Halten in der Freigabe- und der Riegelstellung aufweisen.

2. Steckverbindung nach Anspruch 1,
**dadurch gekennzeichnet, dass** der Keilschieber (26) für seine Bewegung aus der Riegelstellung in die Freigabestellung einen Betätigungsangriff (64) in Form eines Eingriffspalts zwischen dem Schieberteil (38) und dem Festteil (36) für ein Lösewerkzeug aufweist, wobei das Schieberteil (38) einen Betätigungsknoten (64a) ausgebildet hat, welcher axial zur Steckachse (X) vom Schieberteil (38) hervorsteht und den Betätigungsangriff (64) vergrößert.

3. Steckverbindung nach Anspruch 1 oder 2,
**dadurch gekennzeichnet, dass** das Schieberteil (38) an seiner vom Festteil (36) abgewandten Seite eine Druckmulde aufweist, welche in Schubrichtung (32) konkav ausgebildet ist.

4. Steckverbindung nach einem der Ansprüche 1 bis 3,
**dadurch gekennzeichnet, dass** das Festteil (36) erste Rastmittel (46b) und/oder zweite Rastmittel (62b) und die Anlagearme (42) des Schieberteils (38) erste Rastmittel (46c) und/oder zweite Rastmittel (62c) zum Halten des Schieberteils (38) in der Freigabestellung und der Riegelstellung aufweisen.

5. Steckverbindung nach einem der Ansprüche 1 bis 4,
**dadurch gekennzeichnet, dass** die Anlagearme (42) des Schieberteils (38) federelastisch ausgebildet sind und beidseitig der Keilflächen (28c) Seitenwände (52) aufweisen, die gemeinsam mit den Keilflächen (28c) eine Aufnahmevertiefung zur bereichsweisen Aufnahme des Festteils (36) bilden, wobei das Schieberteil (38) das Festteil (36) bereichsweise umgreift.

6. Steckverbindung nach Anspruch 5,
**dadurch gekennzeichnet, dass** die Anlagearme (42) des Schieberteils (38) die Führungsmittel (44) des Festteils (36) umgreifen.

7. Steckverbindung nach einem der Ansprüche 4 bis 6,
**dadurch gekennzeichnet, dass** die zweiten Rastmittel (62b) an den Führungsmitteln (44) des Festteils (36) radial zur Steckachse (X) nach außen weisend ausgebildet sind, die in korrespondierend ausgebildete zweite Rastmittel (62c) an den Anlagearmen (42) des Schieberteils (38) eingreifen können, wobei die zweiten Rastmittel (62b, 62c) an den Führungsmitteln (44) und an den Anlagearmen (42) einer lösbaren kraftformschlüssigen Fixierung des Schieberteils (38) in Riegelstellung dienen.

8. Steckverbindung nach einem der Ansprüche 4 bis 7,
**dadurch gekennzeichnet, dass** die zweiten Rastmittel (62c) an den Anlagearmen (42) in Riegelstellung, radial zur Steckachse (X) in Schubrichtung (32) des Schieberteils (38) beim Überführen aus der Freigabestellung in die Riegelstellung betrachtet, hinter der Lochöffnung (40) ausgebildet sind.

9. Steckverbindung nach einem der Ansprüche 4 bis 8,
**dadurch gekennzeichnet, dass** die zweiten Rastmittel (62b) des Festteils (36) als Verriegelungsnasen (62b) ausgebildet sind, die in korrespondierende als Aussparungen (62c) ausgebildete, zweite Rastmittel (62c) in den Anlagearmen (42) des Schieberteils (38) einrasten können und die Verriegelungsnasen (62b) einen Verriegelungswinkel (β) und einen Entriegelungswinkel (γ) aufweisen, wobei die Aussparungen (62c) korrespondierend zu den Winkeln (β, γ) ausgebildet sind.

10. Steckverbindung nach Anspruch 9,
**dadurch gekennzeichnet, dass** der Verriegelungswinkel (β) 10° bis 50° und der Entriegelungswinkel (γ) 45° bis 85° beträgt, vorzugsweise beträgt der Verriegelungswinkel (β) 20° bis 40° und der Entriegelungswinkel (γ) 55° bis 75°, und besonders bevorzugt beträgt der Verriegelungswinkel (β) 30° und der Entriegelungswinkel (γ) 65°

11. Steckverbindung nach einem der Ansprüche 5 bis 10,
**dadurch gekennzeichnet, dass** die Seitenwände (52) der Anlagearme (42) des Schieberteils (38), jeweils an einer von den Anlagearmen (42) gebildeten Schlitzöffnung (54), radial zur Steckachse (X) nach innen gerichtete erste Rastmittel (46c) aufweisen, und das Festteil (36) zu den ersten Rastmitteln (46c) des Schieberteils (38) kompatible erste Rastmittel (46b) aufweist, wodurch das Schieberteil (38) in Freigabestellung an dem Festteil (36) gehalten wird.

12. Steckverbindung nach Anspruch 11,
**dadurch gekennzeichnet, dass** die ersten Rastmittel (46b) am Festteil (36) als Vorsprünge ausgebildet sind, die beidseitig am Festteil (36) im Außenbereich der Keilflächen (28b) und parallel zur Steckachse (X) verlaufend angeordnet sind.

13. Steckverbindung nach Anspruch 11 oder 12,
**dadurch gekennzeichnet, dass** die ersten Rastmittel (46c) des Schieberteils jeweils das Ende der Anlagearme (42) des Schieberteils (38) bilden und in Riegelstellung im Außenbereich bündig mit dem Festteil (36) enden.

14. Steckverbindung nach einem der Ansprüche 1 bis 4,
**dadurch gekennzeichnet, dass** das Festteil (36) federelastische Führungsarme (72) ausgebildet hat, die zusammen mit den Führungsmitteln (44) für die Anlagearme (42) des Schieberteils (38) einen Führungskanal (70) bilden.

15. Steckverbindung nach Anspruch 14,
**dadurch gekennzeichnet, dass** die Anlagearme (42) des Schieberteils (38) in Richtung der Steckachse (X) keilförmig ausgebildet sind.

16. Steckverbindung nach Anspruch 14 oder 15,
**dadurch gekennzeichnet, dass** die Anlagearme (42) zu ihrem jeweiligen Ende hin radial zur Steckachse (X) keilförmig ausgebildet sind, wobei das Festteil (36) derart bemessene Aussparungen (76) aufweist, dass beim Überführen des Schieberteils (38) von der Freigabestellung in die Riegelstellung, keilförmigen Enden (74) der Anlagearme (42) in den kompatiblen Aussparungen (76) des Festteils (36) aufgenommen werden.

17. Steckverbindung nach einem der Ansprüche 14 bis 16,
**dadurch gekennzeichnet, dass** in Riegelstellung eine Anlagefläche (50) der Anlagearme (42) des Schieberteils (38) mit einer sichtbaren Oberfläche (56) der inneren Führungsmittel (44) sowie einer sichtbaren Oberfläche der außenliegenden Führungsarme (72) des Festteils (36) in einer Ebene liegt.

18. Steckverbindung nach einem der Ansprüche 14 bis 17,
**dadurch gekennzeichnet, dass** die Führungsarme (72) des Festteils (36) die radial zur Steckachse (X) nach innen gerichteten zweiten Rastmittel (62b) zum Halten des Schieberteils (38) in der Riegelstellung und der Freigabestellung aufweisen, und das Schieberteil (38) an den Anlagearmen (42) die radial zur Steckachse (X) nach außen gerichteten zweiten Rastmittel (62c) zum Halten des Schieberteils (38) in Riegelstellung und Freigabestellung aufweisen.

19. Steckverbindung nach Anspruch 18,
**dadurch gekennzeichnet, dass** die zweiten Rastmittel (62c) an den Anlagearmen (42) jeweils als zwei über die Länge des jeweiligen Anlagearms (42) beabstandete Aussparungen, und die zweiten Rastmittel (62b) der federelastischen Führungsarme (72) jeweils als eine Verriegelungsnase (62b) ausgebildet sind, wobei die Verriegelungsnase (62b) jeweils am Ende der Führungsarme (72) angeordnet ist und in den Führungskanal (70) hineinragt.

20. Steckverbindung nach Anspruch 19,
**dadurch gekennzeichnet, dass** die Verriegelungsnase (62b) einen Verriegelungswinkel (β') und die Aussparungen (62c) einen Entriegelungswinkel (γ') aufweisen, wobei der Verriegelungswinkel (β') 10° bis 50° und der Entriegelungswinkel (γ') 45° bis 85° beträgt, vorzugsweise beträgt der Verriegelungswinkel (β') 20° bis 40° und der Entriegelungswinkel (γ') 55° bis 75°, und besonders bevorzugt beträgt der Verriegelungswinkel (β') 30° und der Entriegelungswinkel (γ') 65°.

21. Steckverbindung nach einem der Ansprüche 14 bis 20,
**dadurch gekennzeichnet, dass** die federelastischen Führungsarme (72) radial zur Steckachse (X) nach innen gekrümmt ausgebildet sind.

22. Steckverbindung nach einem der Ansprüche 14 bis 21,
**dadurch gekennzeichnet, dass** an einem U-förmigen Übergangsstück (58) der Anlagearme (42) des Schieberteils (38) Höcker (78) seitlich zur Schubrichtung (32) des Schieberteils (38) beim Überführen aus der Freigabestellung in die Riegelstellung betrachtet ausgebildet sind, die an den Anlagearmen (42) über eine Breite (Bc1) des Schieberteils (38) hinausragen und eine Gesamtbreite (Bc2) des Schieberteils (38), gemessen radial zur Steckachse (X), zwischen den an dem Übergangsstück (58) jeweils ausgebildeten Höckern (78) bilden.

23. Steckverbindung nach Anspruch 22,
**dadurch gekennzeichnet, dass** die Gesamtbreite (Bc2) des Schieberteils (38), gemessen radial zur Steckachse (X), zwischen den an dem Übergangsstück (58) jeweils ausgebildeten Höckern (78) einer Breite (Bb) des Festteils (38) inklusive der Führungsarme (72) entspricht.

24. Steckverbindung nach einem der Ansprüche 1 bis 23,
**dadurch gekennzeichnet, dass** das Schieberteil (38) und das Festteil (36) als Kunststoff-Spritzgussteile, insbesondere aus Polyamid, ausgebildet sind.

25. Steckverbindung nach Anspruch 24,
**dadurch gekennzeichnet, dass** das Schieberteil (38) und das Festteil (36) als Kunststoff-Spritzgussteile mit einem Glasfaseranteil ausgebildet sind.

## Claims

1. Plug-in connection for fluid lines, having a plug part (2) which can be plugged with a plug shaft (4) in the direction of a plug-in axis (X) into a receiving opening (6) of a housing part (8) so as to be circumferentially sealed, and having a locking device for releasably locking the plug part (2) in its plugged-in connecting position, wherein the locking device consists of a radially deformable holding element (16) arranged on the plug shaft (4) and of a wedge-type slide (26) which is displaceable transversally with respect to the plug-in axis (X) on the plug part (2) in a region lying axially between the holding element (16) and an abutment element (24) of the plug part (2), wherein the holding element (16) and the plug shaft (4) are movable in the axial direction relative to each other between a release position and a holding position in such a manner that, in the release position, the plug shaft (4) is insertable into the receiving opening (6) and is removable from the receiving opening (6) and, in the holding position, is lockable in a form-fitting manner in its connecting position by the holding element (16) sitting at least in regions in a form-fitting manner between corresponding holding surfaces (20, 22) of the receiving opening (6) and of the plug shaft (4), and wherein the wedge-type slide (26) is formed from a fixed part (36) and a slide part (38) and, in a locking position, in a form-fitting manner blocks the axial relative movement between the holding element (16) and the plug shaft (4) in the holding position against transferring into the release position, wherein the wedge-type slide (26) is movable relative to the plug part (2) between an opening-up position and the locking position and is designed in such a manner that, during the movement in a sliding direction (32) from the opening-up position into the locking position, said wedge-type slide also acts as a drive element for a forced movement of holding element (16) and plug shaft (4) from the release position thereof into the holding position thereof by the fixed part (36) sitting captively with a hole opening (40) on the plug part (2), wherein the fixed part (36) and the slide part (38) have corresponding wedge surfaces (28b, 28c), and, when the slide part (38) is transferred from the opening-up position into the locking position, contact arms (42) slide with their wedge surfaces (28c) over the wedge surfaces (28b) of the fixed part (36) and increase an axial distance between the holding element (16) and the abutment element (24), **characterized in that** the slide part (38) has the contact arms (42) and the fixed part (36) has guide means (44) for contacting and guiding the contact arms (42) of the slide part (38), and the fixed part (36) and the slide part (38) have intermeshing latching means (46b, 46c and/or 62b, 62c) for captively holding them in the opening-up position and in the locking position.

2. Plug-in connection according to Claim 1, **characterized in that** the wedge-type slide (26), for its movement from the locking position into the opening-up position, has an actuating engagement means (64) in the form of an engagement gap between the slide part (38) and the fixed part (36) for a release tool, wherein the slide part (38) has an actuating knob (64a) which protrudes from the slide part (38) axially with respect to the plug-in axis (X) and enlarges the actuating engagement means (64) .

3. Plug-in connection according to Claim 1 or 2, **characterized in that** the side of the slide part (38) facing away from the fixed part (36) has a pressing recess which is concave in the sliding direction (32).

4. Plug-in connection according to one of Claims 1 to 3,
**characterized in that** the fixed part (36) has first latching means (46b) and/or second latching means (62b) and the contact arms (42) of the slide part (38) has first latching means (46c) and/or second latching means (62c) for holding the slide part (38) in the opening-up position and in the locking position.

5. Plug-in connection according to one of Claims 1 to 4,
**characterized in that** the contact arms (42) of the slide part (38) are spring-elastic and, on either side of the wedge surfaces (28c), have side walls (52) which, together with the wedge surfaces (28c), form a receiving depression for receiving the fixed part (36) in regions, wherein the slide part (38) engages in regions around the fixed part (36).

6. Plug-in connection according to Claim 5, **characterized in that** the contact arms (42) of the slide part (38) engage around the guide means (44) of the fixed part (36).

7. Plug-in connection according to one of Claims 4 to 6,
**characterized in that** the second latching means (62b) are formed on the guide means (44) of the fixed part (36) in a manner facing outwards radially with respect to the plug-in axis (X) and can engage in correspondingly designed second latching means (62c) on the contact arms (42) of the slide part (38), wherein the second latching means (62b, 62c) on the guide means (44) and on the contact arms (42) serve for releasably fixing the slide part (38) in a force- and form-fitting manner in the locking position.

8. Plug-in connection according to one of Claims 4 to 7,
**characterized in that** the second latching means (62c) are formed on the contact arms (42) behind the hole opening (40) in the locking position, as viewed radially with respect to the plug-in axis (X) in the sliding direction (32) of the slide part (38) during the transfer from the opening-up position into the locking position.

9. Plug-in connection according to one of Claims 4 to 8,
**characterized in that** the second latching means (62b) of the fixed part (36) are designed as locking lugs (62b) which can latch into corresponding second latching means (62c), which are designed as cut outs (62c), in the contact arms (42) of the slide part (38), and the locking lugs (62b) have a locking angle (β) and a release angle (γ), wherein the cut outs (62c) are formed in a corresponding manner to the angles (β, γ).

10. Plug-in connection according to Claim 9, **characterized in that** the locking angle (β) is 10° to 50° and the release angle (γ) is 45° to 85°, preferably the locking angle (β) is 20° to 40° and the release angle (γ) is 55° to 75°, and particularly preferably the locking angle (β) is 30° and the release angle (γ) is 65°.

11. Plug-in connection according to one of Claims 5 to 10,
**characterized in that** the side walls (52) of the contact arms (42) of the slide part (38) have, in each case at a slot opening (54) formed by the contact arms (42), first latching means (46c) which are directed inwards radially with respect to the plug-in axis (X), and the fixed part (36) has first latching means (46b) which are compatible with the first latching means (46c) of the slide part (38), as a result of which the slide part (38) in the opening-up position is held on the fixed part (36).

12. Plug-in connection according to Claim 11, **characterized in that** the first latching means (46b) are formed on the fixed part (36) as protrusions which are arranged on either side of the fixed part (36) in the outer region of the wedge surfaces (28b) and running parallel to the plug-in axis (X).

13. Plug-in connection according to Claim 11 or 12, **characterized in that** the first latching means (46c) of the slide part each form the end of the contact arms (42) of the slide part (38) and end flush in the outer region with the fixed part (36) in the locking position.

14. Plug-in connection according to one of Claims 1 to 4,
**characterized in that** the fixed part (36) has formed spring-elastic guide arms (72) which, together with the guide means (44) for the contact arms (42) of the slide part (38), form a guide channel (70).

15. Plug-in connection according to Claim 14, **characterized in that** the contact arms (42) of the slide part (38) are wedge-shaped in the direction of the plug-in axis (X).

16. Plug-in connection according to Claim 14 or 15, **characterized in that** the contact arms (42) are wedge-shaped towards their respective end radially with respect to the plug-in axis (X), wherein the fixed part (36) has cut outs (76) dimensioned in such a manner that, during the transfer of the slide part (38) from the release position into the locking position, wedge-shaped ends (74) of the contact arms (42) are received in the compatible cut outs (76) of the fixed part (36).

17. Plug-in connection according to one of Claims 14 to 16,
**characterized in that,** in the locking position, a contact surface (50) of the contact arms (42) of the slide part (38) lies in a plane with a visible surface (56) of the inner guide means (44) and with a visible surface of the outer guide arms (72) of the fixed part (36).

18. Plug-in connection according to one of Claims 14 to 17,
**characterized in that** the guide arms (72) of the fixed part (36) have the second latching means (62b), which are directed inwards radially with respect to the plug-in axis (X), for holding the slide part (38) in the locking position and in the opening-up position, and the slide part (38) has, on the contact arms (42), the second latching means (62c), which are directed outwards radially with respect to the plug-in axis (X), for holding the slide part (38) in the locking position and opening-up position.

19. Plug-in connection according to Claim 18, **characterized in that** the second latching means (62c) on the contact arms (42) are in each case designed as two cut outs spaced apart over the length of the respective contact arm (42), and the second latching means (62b) of the spring-elastic guide arms (72) are each designed as a locking lug (62b), wherein the locking lug (62b) is in each case arranged at the end of the guide arms (72) and protrudes into the guide channel (70).

20. Plug-in connection according to Claim 19, **characterized in that** the locking lug (62b) has a locking angle (β') and the cut outs (62c) have a release angle (γ'), wherein the locking angle (β') is 10° to 50° and the release angle (γ') is 45° to 85°, preferably the locking angle (β') is 20° to 40° and the release angle (γ') is 55° to 75°, and particularly preferably the locking angle (β') is 30° and the release angle (γ') is 65°.

21. Plug-in connection according to one of Claims 14 to 20,
**characterized in that** the spring-elastic guide arms (72) are curved inwards radially with respect to the plug-in axis (X).

22. Plug-in connection according to one of Claims 14 to 21,
**characterized in that** humps (78) are formed on a U-shaped transition piece (58) of the contact arms (42) of the slide part (38), as viewed laterally to the sliding direction (32) of the slide part (38) during the transfer from the opening-up position into the locking position, said humps (78) protruding on the contact arms (42) over a width (Bc1) of the slide part (38) and forming an overall width (Bc2) of the slide part (38), measured radially with respect to the plug-in axis (X), between the humps (78) in each case formed on the transition piece (58).

23. Plug-in connection according to Claim 22, **characterized in that** the overall width (Bc2) of the slide part (38), measured radially with respect to the plug-in axis (X), between the humps (78) in each case formed on the transition piece (58) corresponds to a width (Bb) of the fixed part (38) including the guide arms (72).

24. Plug-in connection according to one of Claims 1 to 23,
**characterized in that** the slide part (38) and the fixed part (36) are designed as plastics injection-moulded parts, in particular made from polyamide.

25. Plug-in connection according to Claim 24, **characterized in that** the slide part (38) and the fixed part (36) are designed as plastics injection-moulded parts with a portion of glass fibres.

## Revendications

1. Raccord à enfichage pour conduites de fluide, comportant une partie enfichable (2) qui peut être enfichée dans la direction d'un axe d'enfichage (X), par une tige enfichable(4), dans une ouverture de réception (6) d'une partie de boîtier (8), de manière étanche au niveau la périphérie, et comportant un dispositif de verrouillage permettant de bloquer de manière libérable la partie enfichable (2) dans sa position de connexion enfichée, dans lequel le dispositif de verrouillage se compose d'un élément de retenue (16) pouvant être déformé radialement, disposé sur la tige enfichable (4), et d'un coulisseau à clavettes (26) pouvant coulisser sur la partie enfichable (2) dans une région située axialement entre l'élément de retenue (16) et un élément de butée (24) de la partie enfichable (2) transversalement à la direction d'enfichage (X), l'élément de retenue (16) et la tige enfichable (4) pouvant être déplacés dans la direction axiale l'un par rapport à l'autre entre une position de desserrage et une position de retenue de telle sorte que la tige enfichable (4) peut être introduite dans l'ouverture de réception (6) dans la position de desserrage et peut être retirée de l'ouverture de réception (6) et peut être bloquée dans la position de retenue par complémentarité de formes dans sa position de connexion, par le fait que l'élément de retenue (16) est calé au moins dans certaines régions par complémentarité de formes entre des surfaces de retenue (20, 22) correspondantes de l'ouverture de réception (6) et de la tige enfichable (4), et dans lequel le coulisseau à clavettes (26) est formé à partir d'une partie fixe (36) et d'une partie coulissante (38) et, dans une position de verrouillage, bloque le déplacement axial relatif entre l'élément de retenue (16) et la tige enfichable (4) dans la position de retenue pour éviter un passage à la position de desserrage, dans lequel le coulisseau à clavettes (26) est réalisé de manière mobile par rapport à la partie enfichable (2), entre une position de libération et la position de verrouillage, de telle sorte qu'il sert également d'élément d'entraînement pour un déplacement forcé de l'élément de retenue (16) et de la tige enfichable (4) hors de leur position de desserrage dans leur position de retenue pendant le déplacement de la position de libération à la position de verrouillage dans une direction de poussée (32), par le fait que la partie fixe (36) repose de manière imperdable sur la partie enfichable (2) par un trou d'ouverture (40), la partie fixe (36) et la partie coulissante (38) comprenant des surfaces cunéiformes (28b, 28c) correspondantes, et lors du passage de la partie coulissante (38) de la position de libération à la position de verrouillage, des bras d'appui (42) glissent par leurs surfaces cunéiformes (28c) sur les surfaces cunéiformes (28b) de la partie fixe (36) et augmentent une distance axiale entre l'élément de retenue (16) et l'élément de butée (24),
**caractérisé en ce que** la partie coulissante (38) comprend les bras d'appui (42) et la partie fixe (36) comprend des moyens de guidage (44) pour l'appui et le guidage des bras d'appui (42) de la partie coulissante (38), et la partie fixe (36) et la partie coulissante (38) comprennent des moyens d'encliquetage (46b, 46c et/ou 62b, 62c) venant en prise les uns dans les autres pour la retenue de manière imperdable dans la position de libération et de verrouillage.

2. Raccord à enfichage selon la revendication 1, **caractérisé en ce que** le coulisseau à clavettes (26) comprend pour son déplacement de la position de verrouillage à la position de libération un point d'engagement d'actionnement (64) sous la forme d'une fente d'entrée en prise entre la partie coulissante (38) et la partie fixe (36) pour un outil de desserrage, la partie coulissante (38) comportant un bossage d'actionnement (64a), lequel dépasse de la partie coulissante (38) axialement par rapport à l'axe d'enfichage (X) et agrandit le point d'engagement d'actionnement (64).

3. Raccord à enfichage selon la revendication 1 ou 2, **caractérisé en ce que** la partie coulissante (38) comprend, sur son côté opposé à la partie fixe (36), une cavité de pression, laquelle est formée de manière concave dans la direction de poussée (32).

4. Raccord à enfichage selon l'une des revendications 1 à 3,
**caractérisé en ce que** la partie fixe (36) comprend des premiers moyens d'encliquetage (46b) et/ou des deuxièmes moyens d'encliquetage (62b) et les bras d'appui (42) de la partie coulissante (38) comprennent des premiers moyens d'encliquetage (46c) et/ou des deuxièmes moyens d'encliquetage (62c) pour la retenue de la partie coulissante (38) dans la position de libération et la position de verrouillage.

5. Raccord à enfichage selon l'une des revendications 1 à 4,
**caractérisé en ce que** les bras d'appui (42) de la partie coulissante (38) sont réalisés de manière élastique et comprennent, des deux côtés des surfaces cunéiformes (28c), des parois latérales (52) qui, conjointement avec les surfaces cunéiformes (28c), forment un évidement de réception pour la réception, dans certaines régions, de la partie fixe (36), la partie coulissante (38) venant en prise autour de la partie fixe (36) dans certaines régions.

6. Raccord à enfichage selon la revendication 5, **caractérisé en ce que** les bras d'appui (42) de la partie coulissante (38) viennent en prise autour des moyens de guidage (44) de la partie fixe (36).

7. Raccord à enfichage selon l'une des revendications 4 à 6,
**caractérisé en ce que** les deuxièmes moyens d'encliquetage (62b) sont réalisés sur les moyens de guidage (44) de la partie fixe (36) de manière tournée vers l'extérieur radialement par rapport à l'axe d'enfichage (X), lesquels peuvent venir en prise dans des deuxièmes moyens d'encliquetage (62c), réalisés de manière correspondante, sur les bras d'appui (42) de la partie coulissante (38), les deuxièmes moyens d'encliquetage (62b, 62c) sur les moyens de guidage (44) et sur les bras d'appui (42) servant à une fixation par engagement par force libérable de la partie coulissante (38) dans la position de verrouillage.

8. Raccord à enfichage selon l'une des revendications 4 à 7,
**caractérisé en ce que** les deuxièmes moyens d'encliquetage (62c) sur les bras d'appui (42) sont, dans la position de verrouillage, réalisés derrière le trou d'ouverture (40), considérés radialement par rapport à l'axe d'enfichage (X) dans la direction de poussée (32) de la partie coulissante (38) lors du passage de la position de libération à la position de verrouillage.

9. Raccord à enfichage selon l'une des revendications 4 à 8,
**caractérisé en ce que** les deuxièmes moyens d'encliquetage (62b) de la partie fixe (36) sont réalisés sous forme d'ergots de verrouillage (62b) qui peuvent s'encliqueter dans des deuxièmes moyens d'encliquetage (62c) correspondants, réalisés sous forme d'évidements (62c), dans les bras d'appui (42) de la partie coulissante (38) et les ergots de verrouillage (62b) présentent un angle de verrouillage (β) et un angle de déverrouillage (γ),
les évidements (62c) étant réalisés de manière correspondante aux angles (β, γ).

10. Raccord à enfichage selon la revendication 9, **caractérisé en ce que** l'angle de verrouillage (β) vaut de 10° à 50° et l'angle de déverrouillage (γ) vaut de 45° à 85°, de préférence l'angle de verrouillage (β) vaut de 20° à 40° et l'angle de déverrouillage (γ) vaut de 55° à 75°, et de manière particulièrement préférée l'angle de verrouillage (β) vaut 30° et l'angle de déverrouillage (γ) vaut 65°.

11. Raccord à enfichage selon l'une des revendications 5 à 10,
**caractérisé en ce que** les parois latérales (52) des bras d'appui (42) de la partie coulissante (38), respectivement au niveau d'une ouverture en fente (54) formée par les bras d'appui (42), comprennent des premiers moyens d'encliquetage (46c) orientés vers l'intérieur radialement par rapport à l'axe d'enfichage (X), et la partie fixe (36) comprend des premiers moyens d'encliquetage (46b) compatibles avec les premiers moyens d'encliquetage (46c) de la partie coulissante (38), de sorte que la partie coulissante (38) soit retenue sur la partie fixe (36) dans la position de libération.

12. Raccord à enfichage selon la revendication 11, **caractérisé en ce que** les premiers moyens d'encliquetage (46b) sur la partie fixe (36) sont réalisés sous forme de saillies, qui sont disposées de manière à s'étendre des deux côtés sur la partie fixe (36) dans la région extérieure des surfaces cunéiformes (28b) et parallèlement à l'axe d'enfichage (X).

13. Raccord à enfichage selon la revendication 11 ou 12, **caractérisé en ce que** les premiers moyens d'encliquetage (46c) de la partie coulissante forment respectivement l'extrémité des bras d'appui (42) de la partie coulissante (38) et se terminent en affleurement avec la partie fixe (36) dans la région extérieure dans la position de verrouillage.

14. Raccord à enfichage selon l'une des revendications 1 à 4,
**caractérisé en ce que** la partie fixe (36) comporte des bras de guidage (72) élastiques qui, conjointement avec les moyens de guidage (44) pour les bras d'appui (42) de la partie coulissante (38), forment un canal de guidage (70) .

15. Raccord à enfichage selon la revendication 14, **caractérisé en ce que** les bras d'appui (42) de la partie coulissante (38) sont réalisés de manière cunéiforme en direction de l'axe d'enfichage (X).

16. Raccord à enfichage selon la revendication 14 ou 15, **caractérisé en ce que** les bras d'appui (42) sont réalisés de manière cunéiforme radialement par rapport à l'axe d'enfichage (X) en direction de leur extrémité respective, la partie fixe (36) comprenant des évidements (76) dimensionnés de telle sorte que, lors du passage de la partie coulissante (38) de la position de libération à la position de verrouillage, des extrémités cunéiformes (74) des bras d'appui (42) sont reçues dans les évidements (76) compatibles de la partie fixe (36).

17. Raccord à enfichage selon l'une des revendications 14 à 16,
**caractérisé en ce que**, dans la position de verrouillage, une surface d'appui (50) des bras d'appui (42) de la partie coulissante (38) se situe dans un plan avec une surface visible (56) des moyens de guidage (44) intérieurs ainsi qu'avec une surface visible des bras de guidage (72) extérieurs de la partie fixe (36).

18. Raccord à enfichage selon l'une des revendications 14 à 17,
**caractérisé en ce que** les bras de guidage (72) de la partie fixe (36) comprennent les deuxièmes moyens d'encliquetage (62b) orientés vers l'intérieur radialement par rapport à la direction d'enfichage (X) pour la retenue de la partie coulissante (38) dans la position de verrouillage et la position de libération, et la partie coulissante (38) comprend, sur les bras d'appui (42), les deuxièmes moyens d'encliquetage (62c) orientés vers l'extérieur radialement par rapport à la direction d'enfichage (X) pour la retenue de la partie coulissante (38) dans la position de verrouillage et la position de libération.

19. Raccord à enfichage selon la revendication 18, **caractérisé en ce que** les deuxièmes moyens d'encliquetage (62c) sur les bras d'appui (42) sont réalisés respectivement sous la forme de deux évidements espacés sur la longueur du bras d'appui (42) respectif, et les deuxièmes moyens d'encliquetage (62b) des bras de guidage (72) élastiques sont réalisés respectivement sous la forme d'un ergot de verrouillage (62b), l'ergot de verrouillage (62b) étant disposé respectivement à l'extrémité des bras de guidage (72) et pénétrant dans le canal de guidage (70).

20. Raccord à enfichage selon la revendication 19, **caractérisé en ce que** l'ergot de verrouillage (62b) présente un angle de verrouillage (β') et les évidements (62c) présentent un angle de déverrouillage (γ'), l'angle de verrouillage (β') valant de 10° à 50° et l'angle de déverrouillage (γ') valant de 45° à 85°, de préférence l'angle de verrouillage (β') valant de 20° à 40° et l'angle de déverrouillage (γ') valant de 55° à 75°, et de manière particulièrement préférée l'angle de verrouillage (β') valant 30° et l'angle de déverrouillage (γ') valant 65°.

21. Raccord à enfichage selon l'une des revendications 14 à 20,
**caractérisé en ce que** les bras de guidage (72) élastiques sont réalisés de manière courbée vers l'intérieur radialement par rapport à l'axe d'enfichage (X).

22. Raccord à enfichage selon l'une des revendications 14 à 21,
**caractérisé en ce que** sur une pièce de transition (58) en forme de U des bras d'appui (42) de la partie coulissante (38), des protubérances (78) sont réalisées latéralement par rapport à la direction de poussée (32) de la partie coulissante (38) considérées lors du passage de la position de libération à la position de verrouillage, lesquelles protubérances font saillie au niveau des bras d'appui (42) au-delà d'une largeur (Bc1) de la partie coulissante (38) et forment une largeur totale (Bc2) de la partie coulissante (38), mesurée radialement par rapport à l'axe d'enfichage (X), entre les protubérances (78) réalisées respectivement sur la pièce de transition (58).

23. Raccord à enfichage selon la revendication 22, **caractérisé en ce que** la largeur totale (Bc2) de la partie coulissante (38) correspond à une largeur (Bb) de la partie fixe (38) incluant les bras de guidage (72), mesurée radialement par rapport à l'axe d'enfichage (X), entre les protubérances (78) réalisées respectivement sur la pièce de transition (58).

24. Raccord à enfichage selon l'une des revendications 1 à 23,
**caractérisé en ce que** la partie coulissante (38) et la partie fixe (36) sont réalisées sous forme de parties moulées par injection de matière synthétique, en particulier en polyamide.

25. Raccord à enfichage selon la revendication 24, **caractérisé en ce que** la partie coulissante (38) et la partie fixe (36) sont réalisées sous forme de parties moulées par injection de matière synthétique présentant une proportion de fibres de verre.
